# EUROPÄISCHE PATENTANMELDUNG

(11) **EP 4 850 512 A1**
(43) Veröffentlichungstag der Anmeldung: **09.12.2026**
(21) Anmeldenummer: 25181256.6
(22) Anmeldetag: 06.06.2025
(51) Int. Cl.: A01B 63/22, A01B 63/32, A01B 39/08, A01C 7/20

(54) **LANDWIRTSCHAFTLICHES GERÄT**

(71) Anmelder: 4 Disc GmbH, 44329 Dortmund (DE)
(72) Erfinder: DREESBEIMDIEKE, Hermann, 33334 Gütersloh (DE)
(74) Vertreter: Hoefer & Partner Patentanwälte mbB

(57) **Zusammenfassung**

Die Erfindung betrifft ein Landwirtschaftliches Gerät (1) umfassend eine an einer Zugmaschine befestigbare Zugvorrichtung (2) zum Ziehen entlang einer Fahrtrichtung (100) parallel zu einer horizontalen Längsachse (101), wobei senkrecht zur Längsachse (101) eine horizontale Querachse (102) und eine Hochachse (103) definiert sind, zumindest eine bewegbare Verstellanordnung (3), und zumindest ein Modul (4) mit einem Bodengerät (5), insbesondere Bodenbearbeitungsgerät oder Sägerät, einer Stützvorrichtung (6), ausgebildet zum Rollen oder Gleiten auf dem Boden, einer Parallelogrammanordnung (7) umfassend ein Parallelogramm-Rahmenteil (71), ein dazu paralleles Parallelogramm-Aufnahmeteil (72) und zueinander parallele Parallelogramm-Schwingen (73, 74), wobei die Parallelogramm-Schwingen (73, 74) das Parallelogramm-Rahmenteil (71) mit dem Parallelogramm-Aufnahmeteil (72) verbinden, wobei das Parallelogramm-Rahmenteil (71) an der Zugvorrichtung (2) befestigt ist, wobei das Bodengerät (5) am Parallelogramm-Aufnahmeteil (72) befestigt ist, einer Stützschwinge (8), die die Stützvorrichtung(6) drehbar mit der Parallelogrammanordnung (7) verbindet, einer Zusatzschwinge (9), die parallel zu den Parallelogramm-Schwingen (73, 74) angeordnet ist, wobei die Zusatzschwinge (9) die Verstellanordnung (3) mit der Stützschwinge (8) verbindet.

## Beschreibung

Die Erfindung betrifft ein landwirtschaftliches Gerät, das mittels einer Zugmaschine über ein Feld ziehbar ist.

Der Stand der Technik kennt unterschiedliche landwirtschaftliche Geräte, die mittels einer Zugmaschine über ein Feld zu ziehen sind. Bei bestimmten Feldarbeiten in der Landwirtschaft ist es wichtig, Bodenbearbeitungsgeräte oder Sägeräte sehr exakt in der Tiefe zu führen, um den gewünschten Bearbeitungseffekt zu erzielen und ggf. das Saatgut in der gewünschten Tiefe abzulegen. Bezugsmaß für die Tiefe ist dabei der Abstand des jeweiligen Bodenbearbeitungsgerätes oder Sägerätes zu der darüber befindlichen Bodenoberfläche. Zum Erreichen dieses Ziels ist es im Stand der Technik üblich, die Bodenbearbeitungsgeräte oder Sägeräte an beweglichen Gestängen anzuordnen, die in der Regel mit einer Stützvorrichtung, bspw. einem Tiefenführungsrad oder einer Kufe, an den beweglichen Teilen ausgestattet sind. Die Stützvorrichtung tastet dabei die Oberfläche ab und führt so das jeweilige Bodengerät exakt in der Tiefe. Es sind dabei Nachteilig, dass sich je nach Schwenkwinkel, also je nach Tiefeneinstellung, der Anstellwinkel der Bodengeräte relativ zur Bodenoberfläche ändert.

Es ist Aufgabe vorliegender Erfindung ein landwirtschaftliches Gerät anzugeben, mit dem Bodengeräte möglichst exakt in der Tiefe geführt werden können.

Die Lösung dieser Aufgabe erfolgt durch die Merkmale des unabhängigen Anspruchs. Die abhängigen Ansprüche haben bevorzugte Ausbildungen der Erfindung zum Gegenstand.

Somit wird die Erfindung gelöst durch ein landwirtschaftliches Gerät umfassend eine Zugvorrichtung. Die Zugvorrichtung ist dazu ausgebildet, von einer Zugmaschine entlang einer Fahrtrichtung gezogen zu werden. Parallel zu dieser Fahrtrichtung ist eine horizontale Längsachse definiert. Senkrecht zur Längsachse ist eine horizontale Querachse definiert. Senkrecht zur Längsachse und senkrecht zur Querachse ist eine Hochachse definiert.

Ferner umfasst das landwirtschaftliche Gerät zumindest eine bewegbare Verstellanordnung. Mittels dieser Verstellanordnung können die Bodengeräte des landwirtschaftlichen Gerätes in ihrer Tiefe eingestellt werden.

Das landwirtschaftliche Gerät umfasst zumindest ein Modul, vorzugsweise mehrere gleich aufgebaute Module. Im Folgenden wird meist die Ausgestaltung nur eines Moduls beschrieben, wobei stets vorgesehen ist, dass mehrere, insbesondere alle verwendeten Module gleich ausgestaltet sind. Vorzugsweise umfasst das Gerät zumindest zwei, bevorzugt zumindest drei, der Module die in einer Reihe parallel zur Querachse nebeneinander angeordnet sind.

Das Modul umfasst zumindest ein Bodengerät. Bei dem Bodengerät handelt es sich insbesondere um ein Bodenbearbeitungsgerät oder um eine Sägerät. Das Bodenbearbeitungsgerät umfasst bspw. ein Schar oder eine Scheibe oder ein sonstiges Element, mit dem der Boden bearbeitet werden kann, um bspw. den Boden zu lockern oder unerwünschte Kulturen abzuschneiden. Das entsprechende Werkzeug am Bodenbearbeitungsgerät wird insbesondere im Boden, also unter der Bodenoberfläche geführt.

Das Sägerät umfasst insbesondere eine Vorrichtung, um Saatgut auf dem Boden oder im Boden abzulegen. Entsprechend wird das Sägerät so geführt, dass es über den Boden, exakt auf dem Boden oder im Boden geführt wird. In all diesen Fällen ist es relevant, dass die Tiefe exakt einstellbar und gehalten wird. Auch wenn das Sägerät über den Boden geführt wird oder auf dem Boden geführt wird, wird im Rahmen vorliegender Erfindung von einer "Tiefe" zugesprochen, da es stets auf die relative Position des Bodengeräts zur Bodenoberfläche ankommt. Das Sägerät kann bspw. einen Säschar aufweisen, der im Boden geführt wird und mit dem im Boden Saatgut abgelegt wird.

Das Modul umfasst ferner eine Stützvorrichtung, ausgebildet zum Rollen oder Gleiten auf dem Boden. Bei der Stützvorrichtung handelt es sich insbesondere um eine Kufe oder ein Tiefenführungsrad.

Das Modul umfasst ferner eine Parallelogrammanordnung. Die Parallelogrammanordnung umfasst ein Parallelogramm-Rahmenteil, ein zum Parallelogramm-Rahmenteil paralleles Parallelogramm-Aufnahmeteil und zueinander parallele Parallelogramm-Schwingen. Die Parallelogramm-Schwingen verbinden das Parallelogramm-Rahmenteil mit dem Parallelogramm-Aufnahmeteil.

Das Parallelogramm-Rahmenteil ist an der Zugvorrichtung befestigt. Da insbesondere vorgesehen ist, dass das landwirtschaftliche Gerät mehrere der Module umfasst, sind an der Zugvorrichtung entsprechend auch mehrere Parallelogramm-Rahmenteile befestigt.

Das Bodengerät befindet sich am Parallelogramm-Aufnahmeteil. Bei mehreren Modulen sind entsprechend mehrere Bodengeräte vorgesehen, die sich jeweils an einem eigenen Parallelogramm-Aufnahmeteil befinden.

Vorzugsweise befindet sich das Parallelogramm-Rahmenteil weiter vorne bezüglich der Fahrtrichtung als das Parallelogramm-Aufnahmeteil.

Die Elemente der Parallelogramm-Anordnung, also das Parallelogramm-Rahmenteil, das Parallelogramm-Aufnahmeteil und die Parallelogramm-Schwingen sind vorzugsweise untereinander drehbar miteinander verbunden, um das Parallelogramm zu bilden. Sämtliche Drehachsen stehen dabei vorzugsweise parallel zur Querachse. Insbesondere ist vorgesehen, dass die Parallelogramm-Schwingen im Wesentlichen horizontal und somit parallel zur Längsachse stehen. Bevorzugt ist vorgesehen, dass die Parallelogramm-Schwingen an vorderen Drehpunkten drehbar mit dem Parallelogramm-Rahmenteil verbunden sind und an hinteren Drehpunkten drehbar mit dem Parallelogramm-Aufnahmeteil verbunden sind.

Das Modul umfasst eine Stützschwinge. Die Stützschwinge ist drehbar, insbesondere mit ihrem oberen Ende, mit der Parallelogramm-Anordnung verbunden. Des Weiteren befindet sich an der Stützschwinge, insbesondere am unteren Ende der Stützschwinge, die Stützvorrichtung, also insbesondere das Tiefenführungsrad oder die Kufe.

Das Modul umfasst eine Zusatzschwinge, die parallel zu den Parallelogramm-Schwingen angeordnet ist. Die Zusatzschwinge verbindet die Verstellanordnung mit der Stützschwinge.

Durch diesen Aufbau ist es möglich, dass durch Bewegen der Verstellanordnung, die Zusatzschwinge bewegt wird. Die Zusatzschwinge wiederrum bewegt die Stützschwinge und verändert somit die Position der Stützvorrichtung, wodurch die Tiefe des Bodengerätes eingestellt wird. Dadurch, dass die Zusatzschwinge parallel zu den Parallelogramm-Schwingen angeordnet ist, verändert sich bei Einstellen der Tiefe zwar der Schwenkwinkel der Parallelogramm-Anordnung und somit die Tiefe; der Anstellwinkel des Bodengerätes relativ zur Bodenoberfläche bleibt dabei jedoch gleich. Dies ist insbesondere von Vorteil, da dieser Anstellwinkel bei bestimmten Bodengeräten ausschlaggebend ist für die korrekte Funktionsweise des Bodengerätes. Besonders relevant ist dies, wenn sich das Bodengerät mit seinem im oder am Boden geführten Werkzeug relativ weit in Längsrichtung erstreckt. Aber bspw. auch bei einem relativ kurzen Säschar oder einer rotierenden Scheibe zum Abschneiden von unerwünschten Kulturen, kann der Anstellwinkel für die korrekte Funktion entscheidend sein.

Die Drehpunkte zwischen Stützschwinge und Parallelogramm-Anordnung sowie die Drehpunkte zwischen Zusatzschwinge und Stützschwinge stehen vorzugsweise parallel zur Querachse. Die Zusatzschwinge erstreckt sich vorzugsweise, genauso wie die Parallelogramm-Schwingen zumindest in der Grundstellung des landwirtschaftlichen Gerätes im Wesentlichen parallel zur Längsachse.

Die genannte Verstellanordnung umfasst vorzugsweise ein Verstellelement. Das Verstellelement erstreckt sich parallel zur Querachse und das Verstellelement ist drehbar. Werden mehrere Verstellanordnungen verwendet, bspw. da mehrere Module entlang der Längsachse versetzt zueinander angeordnet sind, sind insbesondere mehrere Verstellelemente vorgesehen. Bei dem Verstellelement handelt es sich vorzugsweise um ein Rohr oder eine Welle. Das Verstellelement ist insbesondere um seine eigene, parallel zur Querachse liegende Achse drehbar.

Das Verstellelement ist vorzugsweise am Parallelogramm-Rahmenteil des zumindest einen Moduls drehbeweglich gelagert. Insbesondere sind mehrere der Module entlang der Querachse nebeneinander angeordnet, also in einer Reihe. Dabei ist insbesondere vorgesehen, dass das Verstellelement an mehreren der Module, insbesondere an allen Modulen, am jeweiligen Parallelogramm-Rahmenteil drehbeweglich gelagert ist.

Das Modul weist vorzugsweise einen Hebel auf. Das Verstellelement ist über den Hebel mit der Zusatzschwinge verbunden, um durch Drehen des Verstellelementes die Zusatzschwinge zu bewegen. Insbesondere ist der Hebel fest mit dem Verstellelement verbunden. Der Hebel ist vorzugsweise drehbar mit der Zusatzschwinge verbunden. Die Drehachse zwischen Hebel und Zusatzschwinge erstreckt sich insbesondere parallel zur Querachse.

Wie bereits erwähnt, weist das landwirtschaftliche Gerät vorzugsweise zumindest eine Reihe auf, wobei in einer Reihe mehrere der genannten Module parallel zur Querachse nebeneinander angeordnet sind. Das Verstellelement erstreckt sich dabei vorzugsweise über mehrere, insbesondere alle Module dieser Reihe. Jedes Modul weist dabei den genannten Hebel auf und ist über den Hebel mit dem Verstellelement verbunden, sodass das Verstellelement über die mehreren Hebel die Zusatzschwingen der angeschlossenen Module gleichzeitig bewegen kann.

Besonders bevorzugt weist das landwirtschaftliche Gerät zumindest zwei der Reihen auf. In jeder Reihe befinden sich mehrere der Module entlang der Querachse nebeneinander. Die einzelnen Reihen sind zueinander entlang der Längsachse versetzt. Insbesondere ist in jeder Reihe ein eigenes Verstellelement, also insbesondere Rohr oder Welle, vorgesehen. Die Verstellelemente der einzelnen Reihen sind vorzugsweise miteinander über ein Koppelement, bspw. eine Stange, verbunden. Das Koppelelement ist dabei vorzugsweise über einen entsprechenden Koppelhebel drehbar mit den Verstellelementen verbunden.

Vorzugsweise umfasst das landwirtschaftliche Gerät einen Aktuator, mit dem die zumindest eine Verstellanordnung bewegt werden kann. Der Aktuator umfasst insbesondre: einen Hydraulik- oder Pneumatikzylinder und/oder eine manuell betätigbare Mechanik, insbesondere mit Spindelantrieb, und/oder eine Mechanik mit antreibendem Elektromotor. Besonders bevorzugt greift der Aktuator an dem Koppelelement an.

Die Stützschwinge ist vorzugsweise drehbeweglich am Parallelogramm-Aufnahmeteil befestigt. Insbesondere schwenkt die Stützschwinge, wenn die Zusatzschwinge bewegt wird, relativ zum Parallelogramm-Aufnahmeteil.

Vorzugsweise ist ein erster Abstand A wie folgt definiert: der erste Abstand A wird gemessen von einem Drehpunkt der Stützschwinge am Parallelogramm-Aufnahmeteil zum Drehpunkt der Zusatzschwinge an der Stützschwinge. Ein zweiter Abstand AA ist wie folgt definiert: der zweite Abstand AA wir gemessen vom Drehpunkt des Verstellelements zum Drehpunkt der Zusatzschwinge am Hebel. Der Drehpunkt des Verstellelements ist insbesondere gegeben durch die parallel zur Querachse liegende Drehachse des Verstellelements, also insbesondere des Rohrs oder der Welle. Bevorzugt ist vorgesehen, dass der erste Abstand A im Wesentlichen gleich dem zweiten Abstand AA ist. "Im Wesentlichen" beschreibt insbesondere eine Abweichung von bis zu 10%, besonders vorzugsweise bis zu 5%. Die beiden Abstände werden als kürzeste Abstände zwischen den entsprechenden Drehpunkten gemessen.

Vorzugsweise ist eine erste Distanz B definiert: die erste Distanz B wird gemessen vom Drehpunkt der Stützschwinge am Parallelogramm-Aufnahmeteil zum Drehpunkt der Zusatzschwinge an der Stützschwinge. Eine zweite Distanz BB ist wie folgt definiert: die zweite Distanz wird gemessen vom Drehpunkt des Verstellelements zum Drehpunkt der Zusatzschwinge am Hebel. Die Distanzen werden dabei horizontal gemessen, also insbesondre parallel zur Längsachse. Vorzugsweise ist vorgesehen, dass die erste Distanz B im Wesentlichen gleich der zweiten Distanz BB ist. "Im Wesentlichen" bedeutet insbesondere eine Abweichung von bis zu 10%, besonders vorzugsweise bis zu 5%.

Die Parallelogramm-Schwingen umfassen vorzugsweise zumindest eine obere Parallelogramm-Schwinge und zumindest eine untere Parallelogramm-Schwinge. Die zumindest eine obere Parallelogramm-Schwinge ist drehbeweglich am Parallelogramm-Rahmenteil und drehbeweglich am Parallelogramm-Aufnahmeteil befestigt. Ebenso ist die zumindest eine untere Parallelogramm-Schwinge drehbeweglich am Parallelogramm-Rahmenteil und drehbeweglich Parallelogramm-Aufnahmeteil befestigt. Die zumindest eine obere Parallelogramm-Schwinge steht vorzugsweise parallel zur zumindest einen unteren Parallelogramm-Schwinge.

Vorzugsweise erstreckt sich die zumindest eine obere Parallelogramm-Schwinge über eine Länge C, die im Wesentlichen gleich einer Länge CC der Zusatzschwinge ist. "Im Wesentlichen" beschreibt insbesondere eine Abweichung von bis 10%, besonders vorzugsweise bis zu 5%. Die Längen der Schwingen sind dabei die Abstände ihrer beiden Drehpunkte zueinander.

Vorzugsweise ist vorgesehen, dass der Drehpunkt der Stützschwinge am Parallelogramm-Aufnahmeteil zwischen der zumindest einen oberen Parallelogramm-Schwinge und der zumindest einen unteren Parallelogramm-Schwinge liegt. Dieser Drehpunkt der Stützschwinge am Parallelogramm-Aufnahmeteil befindet sich somit im Inneren der Parallelogramm-Anordnung. Des Weiteren ist bevorzugt vorgesehen, dass der Drehpunkt der Stützschwinge am Parallelogramm-Aufnahmeteil näher am Parallelogramm-Rahmenteil liegt, als die Drehpunkte der Parallelogramm-Schwingen am Parallelogramm-Aufnahmeteil.

Vorzugsweise befindet sich die Zusatzschwinge unter oder über der Parallelogramm-Anordnung. Besonders bevorzugt ist vorgesehen, dass die Zusatzschwinge unter der zumindest einen unteren Parallelogramm-Schwinge oder über der zumindest einen oberen Parallelogramm-Schwinge angeordnet ist. Insbesondere befindet sich der Drehpunkt der Zusatzschwinge an der Stützschwinge weiter unten als der Drehpunkt der Stützschwinge am Parallelogramm-Aufnahmeteil.

Weitere Einzelheiten, Vorteile und Merkmale der vorliegenden Erfindung ergeben sich aus nachfolgender Beschreibung von Ausführungsbeispielen anhand der Zeichnungen. Es zeigt:
- Fig. 1: eine perspektivische Ansicht des erfindungsgemäßen landwirtschaftlichen Gerätes gemäß einem Ausführungsbeispiel, und
- Fig. 2: eine Seitenansicht des erfindungsgemäßen landwirtschaftlichen Gerätes gemäß dem Ausführungsbeispiel.

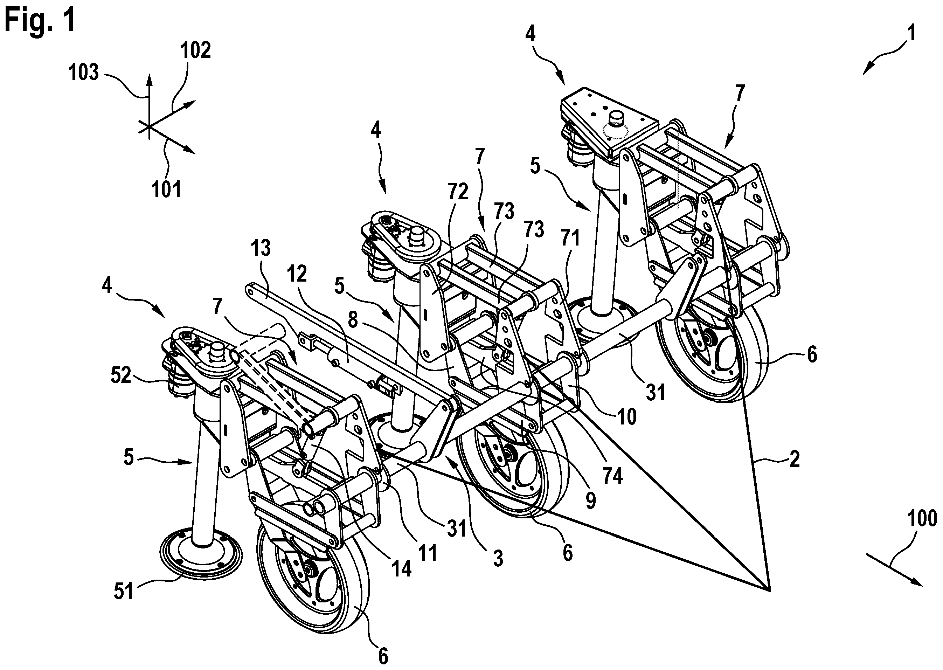

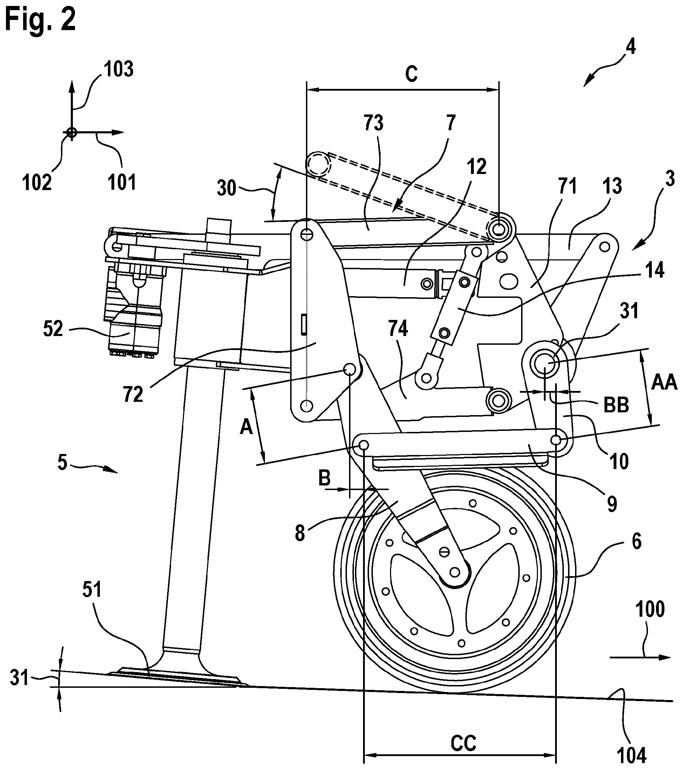

Im Folgenden wird ein Ausführungsbeispiel des landwirtschaftlichen Gerätes 1 im Detail beschrieben. Dabei wird stets auf die Figuren 1 und 2 Bezug genommen.

Das landwirtschaftliche Gerät 1 weist eine Zugvorrichtung 2 auf, die in Fig. 1 nur schematisch dargestellt ist. Die Zugvorrichtung 2 ist dazu ausgebildet, an einer Zugmaschine befestigt zu werden. Mit der Zugmaschine wird das landwirtschaftliche Gerät 1 entlang einer Fahrtrichtung 100 über ein Feld gezogen. Entlang der Fahrtrichtung 100 ist eine Längsachse 101 definiert. Horizontal und senkrecht zur Längsachse 101 erstreckt sich eine Querachse 102. Senkrecht zur Längsachse 101 und senkrecht zur Querachse 102 ist eine Hochachse 103 definiert. Ein Boden 104 ist in Fig. 2 schematisch eingezeichnet.

Fig. 1 zeigt beispielhaft, dass das landwirtschaftliche Gerät 1 drei gleiche Module 4 aufweisen kann. Die Module 4 sind hier in einer Reihe nebeneinander angeordnet. Das landwirtschaftliche Gerät 1 kann mehrere solcher Reihen umfassen, die entlang der Längsachse 101 hintereinander angeordnet sind.

In Fig. 1 ist das hintere Modul 4 vollständig dargestellt. In den beiden vorderen Modulen 4 sind einzelne Bauteile ausgeblendet, um die Erfindung genauer darzustellen. Im Folgenden wird meist der Aufbau nur eines Moduls 4 beschrieben, wobei stets zu verstehen ist, dass sämtliche Module 4 gleich aufgebaut sind.

Das Modul 4 umfasst ein Bodengerät 5. Im gezeigten Ausführungsbeispiel ist das Bodengerät 5 als Bodenbearbeitungsgerät ausgestaltet. Das Bodengerät 5 weist eine Scheibe 51 auf. Die Scheibe 51 ist über einen Antrieb 52 drehbeweglich. Die Scheibe 51 wird unter der Bodenoberfläche geführt und beispielsweise dazu genutzt, um unerwünschte Kulturen im Boden 104 abzuschneiden. Fig. 2 verdeutlicht einen Anstellwinkel 31 der Scheibe 51 relativ zum Boden 104. Die Scheibe 51 ist auf der Bodenoberfläche dargestellt, wobei bei Benutzung des Gerätes 1 sich die Scheibe 51 vorzugsweise im Boden 104 befindet.

Das Modul 4 umfasst ferner eine Stützvorrichtung 6, hier ausgebildet als Tiefenführungsrad.

Ferner umfasst das Modul 4 eine Parallelogramm-Anordnung 7. Die Parallelogramm-Anordnung 7 setzt sich zusammen aus einem Parallelogramm-Rahmenteil 71, einem Parallelogramm-Aufnahmeteil 72, zwei oberen Parallelogramm-Schwingen 73 und einer unteren Parallelogramm-Schwinge 74.

Die Parallelogramm-Rahmenteile 71 aller Module 4 sind an der Zugvorrichtung 2 befestigt und somit während der Benutzung des landwirtschaftlichen Gerätes 1 fest angeordnet. An den jeweiligen Parallelogramm-Aufnahmeteilen 72 sind die Bodengeräte 5 befestigt. Durch ein Bewegen des Parallelogramm-Aufnahmeteils 72 relativ zum Parallelogramm-Rahmenteil 71 verschwenken die Parallelogramm-Schwingen 73, 74, wodurch die Tiefe des Bodengerätes 5 veränderbar ist. Dabei kommt es durch Schwenken der Parallelogramm-Schwingen 73, 74 zu einem entsprechenden Schwenkwinkel 30. Dieser Schwenkwinkel 30 ist in Fig. 2 schematisch dargestellt. Hierzu ist in Fig. 2 eine der oberen Parallelogramm-Schwingen 73, verschwenkt eingezeichnet, um die Position des Schwenkwinkels 30 grafisch darzustellen.

Das Modul umfasst eine Stützschwinge 8. Am unteren Ende der Stützschwingen 8 befindet sich die Stützvorrichtung 6. Das obere Ende der Stützschwinge 8 ist drehbeweglich am Parallelogramm-Aufnahmeteil 72 befestigt. Wie im allgemeinen Teil der Beschreibung erläutert, befindet sich der Drehpunkt zwischen Parallelogramm-Aufnahmeteil 72 und Stützschwinge 8 im Inneren der Parallelogramm-Anordnung 7.

Ferner umfasst das Modul 4 eine Zusatzschwinge 9. Die Zusatzschwinge 9 steht parallel zu den Parallelogramm-Schwingen 73, 74. Die Zusatzschwinge 9 ist mit ihrem hinteren Ende drehbeweglich an der Stützschwinge 8 befestigt.

Wie insbesondere Fig. 1 verdeutlicht, umfasst das landwirtschaftliche Gerät 1 zumindest eine Verstellanordnung 3. Die Verstellanordnung 3 wiederrum umfasst ein Verstellelement 31, hier ausgebildet als Rohr. Das Verstellelement 31 ist drehbar angeordnet. Das Verstellelement 31 ist dabei um eine zur Querachse 102 parallele Drehachse drehbar.

Das Verstellelement 31 ist mit Drehlagern 11 an den Parallelogramm-Rahmenteilen 71 der mehreren Module 4 gelagert. Entsprechend erstreckt sich das Verstellelement 31 parallel zur Querachse 102 über alle Module 104 der dargestellten Reihe.

Jedes Modul 4 weist einen Hebel 10 auf. Der Hebel 10 ist drehbeweglich an der Zusatzschwinge 9 befestigt. Ferner ist der Hebel 10 drehfest mit dem Verstellelement 31 verbunden. Durch Drehen des Verstellelements 31 verschwenkt sich der Hebel 10 an allen Modulen 4. Dadurch wird die Zusatzschwinge 9 bewegt. Dadurch verschwenkt sich die Stützschwinge 8, wodurch die relative Position des Bodengerätes 5 zur Stützvorrichtung 6 verändert wird. Dabei ist insbesondere vorgesehen, dass sich lediglich der Schwenkwinkel 30 aber nicht der Anstellwinkel 31 verändert.

Wie die genaue Ausgestaltung des landwirtschaftlichen Gerätes 1 in den Figuren 1 und 2 zeigt, sind bei der Konstruktion zwei parallele obere Parallelogramm-Schwingen 73 und eine untere Parallelogramm-Schwinge 74 vorgesehen. Die Stützschwinge 8 umfasst zwei parallele Einzelschwingen, zwischen denen das Tiefenführungsrad angeordnet ist. Ebenso ist der Hebel 10 durch zwei parallele Einzelhebel stabil ausgebildet. Die Zusatzschwinge 9 ist ebenfalls durch zwei parallele Einzelschwingen gebildet.

Das Parallelogramm-Rahmenteil 71 ist im Wesentlichen gebildet durch parallele Platten, zwischen denen die beiden oberen Parallelogramm-Schwingen 73 angeordnet sind.

Vorzugsweise umfasst jedes Modul 4 einen Druckzylinder 14. Der Druckzylinder 14 steht diagonal in der Parallelogramm-Anordnung 7. Insbesondere verbindet der Druckzylinder 14 die zumindest eine obere Parallelogramm-Schwinge 73 mit der zumindest einen unteren Parallelogramm-Schwinge 74. Durch den Druckzylinder 14 kann eine gleichmäßige Übertragung des Gewichts des gesamten landwirtschaftlichen Gerätes 1 auf die einzelnen Stützvorrichtungen 6 erreicht werden.

Fig. 1 zeigt ferner ein Koppelelement 13. Das Koppelement 13 ist über einen Hebelarm mit dem gezeigten Verstellelement 31 verbunden. Bei einer weiter hinten angeordneten, dargestellten Reihe mit mehreren Modulen 4 kann das Koppelelement 13 auch mit dem Verstellelement 31 dieser weiteren Reihe entsprechend verbunden werden. Dadurch können die Verstellelemente 31 mehrere Reihen gleichzeitig und mit nur einem Aktor 12 gedreht werden.

Zum Bewegen der Verstellanordnung 3, insbesondere zum Drehen des Verstellelementes 31, ist vorzugsweise der Aktuator 12 vorgesehen, beispielsweise ein Hydraulik- oder Pneumatikzylinder.

Das Verstellelement 31 ist insbesondere so ausgebildet, dass es um etwas +/- 30° drehbar ist.

Fig. 2 zeigt:
Vorzugsweise ist ein erster Abstand A wie folgt definiert: der erste Abstand A wird gemessen von einem Drehpunkt der Stützschwinge 8 am Parallelogramm-Aufnahmeteil 72 zum Drehpunkt der Zusatzschwinge 9 an der Stützschwinge 8. Ein zweiter Abstand AA ist wie folgt definiert: der zweite Abstand AA wir gemessen vom Drehpunkt des Verstellelements 31 zum Drehpunkt der Zusatzschwinge 9 am Hebel 10. Bevorzugt ist vorgesehen, dass der erste Abstand A im Wesentlichen gleich dem zweiten Abstand AA ist.

Vorzugsweise ist eine erste Distanz B definiert: die erste Distanz B wird gemessen vom Drehpunkt der Stützschwinge 8 am Parallelogramm-Aufnahmeteil 72 zum Drehpunkt der Zusatzschwinge 9 an der Stützschwinge 8. Eine zweite Distanz BB ist wie folgt definiert: die zweite Distanz wird gemessen vom Drehpunkt des Verstellelements 31 zum Drehpunkt der Zusatzschwinge 9 am Hebel 10. Vorzugsweise ist vorgesehen, dass die erste Distanz B im Wesentlichen gleich der zweiten Distanz BB ist.

Vorzugsweise erstreckt sich die zumindest eine der oberen Parallelogramm-Schwingen 73 über eine Länge C, die im Wesentlichen gleich einer Länge CC der Zusatzschwinge 9 ist.

### Bezugszeichenliste

- 1: Landwirtschaftliches Gerät
- 2: Zugvorrichtung
- 3: Verstellanordnung
- 31: Verstellelement
- 4: Modul
- 5: Bodengerät
- 51: Scheibe
- 52: Antrieb
- 6: Stützvorrichtung
- 7: Parallelogrammanordnung
- 71: Parallelogramm-Rahmenteil
- 72: Parallelogramm-Aufnahmeteil
- 73: obere Parallelogramm-Schwingen
- 74: untere Parallelogramm-Schwingen
- 8: Stützschwinge
- 9: Zusatzschwinge
- 10: Hebel
- 11: Drehlager
- 12: Aktuator
- 13: Koppelelement
- 14: Druckzylinder
- 30: Schwenkwinkel
- 31: Anstellwinkel
- 100: Fahrtrichtung
- 101: Längsachse
- 102: Querachse
- 103: Hochachse
- 104: Boden

## Patentansprüche

1. **Landwirtschaftliches** Gerät (1) umfassend
• eine an einer Zugmaschine befestigbare Zugvorrichtung (2) zum Ziehen entlang einer Fahrtrichtung (100) parallel zu einer horizontalen Längsachse (101), wobei senkrecht zur Längsachse (101) eine horizontale Querachse (102) und eine Hochachse (103) definiert sind,
• zumindest eine bewegbare Verstellanordnung (3),
• und zumindest ein Modul (4) mit
∘ einem Bodengerät (5), insbesondere Bodenbearbeitungsgerät oder Sägerät,
∘ einer Stützvorrichtung (6), ausgebildet zum Rollen oder Gleiten auf dem Boden,
∘ einer Parallelogrammanordnung (7) umfassend ein Parallelogramm-Rahmenteil (71), ein dazu paralleles Parallelogramm-Aufnahmeteil (72) und zueinander parallele Parallelogramm-Schwingen (73, 74), wobei die Parallelogramm-Schwingen (73, 74) das Parallelogramm-Rahmenteil (71) mit dem Parallelogramm-Aufnahmeteil (72) verbinden,
∘ wobei das Parallelogramm-Rahmenteil (71) an der Zugvorrichtung (2) befestigt ist,
∘ wobei das Bodengerät (5) am Parallelogramm-Aufnahmeteil (72) befestigt ist,
∘ einer Stützschwinge (8), die die Stützvorrichtung(6) drehbar mit der Parallelogrammanordnung (7) verbindet,
∘ einer Zusatzschwinge (9), die parallel zu den Parallelogramm-Schwingen (73, 74) angeordnet ist,
∘ wobei die Zusatzschwinge (9) die Verstellanordnung (3) mit der Stützschwinge (8) verbindet.

2. Landwirtschaftliches Gerät (1) nach Anspruch 1, wobei die zumindest eine Verstellanordnung (3) ein sich parallel zur Querachse (102) erstreckendes, drehbares Verstellelement (31), insbesondere Rohr oder Welle, umfasst.

3. Landwirtschaftliches Gerät (1) nach Anspruch 2, wobei das Verstellelement (31) am Parallelogramm-Rahmenteil (71) des zumindest einen Moduls (4) drehbeweglich gelagert ist.

4. Landwirtschaftliches Gerät (1) nach Anspruch 2 oder 3, wobei das zumindest eine Modul (4) einen Hebel (10) umfasst, wobei das Verstellelement (31) über den Hebel (10) mit der Zusatzschwinge (9) verbunden ist, um die Zusatzschwinge (9) zu Bewegen.

5. Landwirtschaftliches Gerät (1) nach Anspruch 4, umfassend mehrere der Module (4), die entlang der Querachse (102) nebeneinander angeordnet sind, wobei das Verstellelement (31) mit den Hebeln (10) der mehreren Module (4) verbunden ist, um die Zusatzschwingen (9) der mehreren Module (4) gleichzeitig zu Bewegen.

6. Landwirtschaftliches Gerät (1) nach einem der vorhergehenden Ansprüche, wobei die Stützschwinge (8) drehbeweglich am Parallelogramm-Aufnahmeteil (72) befestigt ist.

7. Landwirtschaftliches Gerät (1) nach Anspruch 4 oder 5 in Kombination mit Anspruch 6, wobei
• der Drehpunkt der Stützschwinge (8) am Parallelogramm-Aufnahmeteil (72) vom Drehpunkt der Zusatzschwinge (9) an der Stützschwinge (8) mit einem ersten Abstand (A) beabstandet ist,
• der Drehpunkt des Verstellelements (31) vom Drehpunkt des Zusatzschwinge (9) am Hebel (10) mit einem zweiten Abstand (AA) beabstandet ist,
• wobei der erste Abstand (A) im Wesentlichem gleich dem zweiten Abstand (AA) ist,
und/oder
• der Drehpunkt der Stützschwinge (8) am Parallelogramm-Aufnahmeteil (72) zum Drehpunkt der Zusatzschwinge (9) an der Stützschwinge (8) eine erste horizontale Distanz (B) aufweist,
• der Drehpunkt des Verstellelements (31) zum Drehpunkt des Zusatzschwinge (9) am Hebel (10) eine zweite horizontale Distanz (BB) aufweist,
• wobei die erste Distanz (B) im Wesentlichem gleich der zweiten Distanz (BB) ist,

8. Landwirtschaftliches Gerät (1) nach einem der vorhergehenden Ansprüche, wobei die Parallelogramm-Schwingen umfassen: zumindest eine obere Parallelogramm-Schwinge (73), die drehbeweglich am Parallelogramm-Rahmenteil (71) und drehbeweglich am Parallelogramm-Aufnahmeteil (72) befestigt ist, und zumindest eine untere Parallelogramm-Schwinge (74), die drehbeweglich am Parallelogramm-Rahmenteil (71) und drehbeweglich am Parallelogramm-Aufnahmeteil (72) befestigt ist.

9. Landwirtschaftliches Gerät (1) nach Anspruch 8, wobei die Länge (C) der zumindest einen oberen Parallelogramm-Schwinge (73) im Wesentlichen gleich der Länge (CC) der Zusatzschwinge (9) ist.

10. Landwirtschaftliches Gerät (1) nach Anspruch 8 oder 9 in Kombination mit Anspruch 6, wobei der Drehpunkt der Stützschwinge (8) am Parallelogramm-Aufnahmeteil (72) zwischen der zumindest einen oberen Parallelogramm-Schwinge (73) und der zumindest einen unteren Parallelogramm-Schwinge (74) liegt.

11. Landwirtschaftliches Gerät (1) nach einem der vorhergehenden Ansprüche, wobei die Zusatzschwinge (9) unter oder über der Parallelogrammanordnung (7) angeordnet ist; vorzugsweise wobei die Zusatzschwinge (9) unter der unteren Parallelogramm-Schwinge (74) oder über der oberen Parallelogramm-Schwinge (73) angeordnet ist.

12. Landwirtschaftliches Gerät (1) nach einem der vorhergehenden Ansprüche, umfassend zumindest einen Aktuator (12) zum Bewegen der zumindest einen Verstellanordnung (3), insbesondere zum Drehen des Verstellelements (31).

13. Landwirtschaftliches Gerät (1) nach einem der vorhergehenden Ansprüche, umfassend eine erste Reihe mit mehreren der Module (4) und zumindest eine weitere Reihe mit mehreren der Module (4), wobei pro Reihe eine der Verstellanordnungen (3) angeordnet ist, wobei die Verstellanordnung (3) der ersten Reihe mit der Verstellanordnung (3) der weiteren Reihe gekoppelt ist; vorzugsweise wobei das drehbare Verstellelement (31) der ersten Reihe mit dem drehbaren Verstellelement (31) der weiteren Reihe gekoppelt ist.

## Geänderte Patentansprüche

### Geänderte Patentansprüche gemäss Regel 137(2) EPÜ.

1. Landwirtschaftliches Gerät (1) umfassend
• eine an einer Zugmaschine befestigbare Zugvorrichtung (2) zum Ziehen entlang einer Fahrtrichtung (100) parallel zu einer horizontalen Längsachse (101), wobei senkrecht zur Längsachse (101) eine horizontale Querachse (102) und eine Hochachse (103) definiert sind,
• zumindest eine bewegbare Verstellanordnung (3),
• und zumindest ein Modul (4) mit
∘ einem Bodengerät (5), insbesondere Bodenbearbeitungsgerät oder Sägerät,
∘ einer Stützvorrichtung (6), ausgebildet zum Rollen oder Gleiten auf dem Boden,
∘ einer Parallelogrammanordnung (7) umfassend ein Parallelogramm-Rahmenteil (71), ein dazu paralleles Parallelogramm-Aufnahmeteil (72) und zueinander parallele Parallelogramm-Schwingen (73, 74), wobei die Parallelogramm-Schwingen (73, 74) das Parallelogramm-Rahmenteil (71) mit dem Parallelogramm-Aufnahmeteil (72) verbinden,
∘ wobei das Parallelogramm-Rahmenteil (71) an der Zugvorrichtung (2) befestigt ist,
∘ wobei das Bodengerät (5) am Parallelogramm-Aufnahmeteil (72) befestigt ist,
∘ einer Stützschwinge (8), die die Stützvorrichtung(6) drehbar mit der Parallelogrammanordnung (7) verbindet,
∘ einer Zusatzschwinge (9), die parallel zu den Parallelogramm-Schwingen (73, 74) angeordnet ist,
∘ wobei die Zusatzschwinge (9) die Verstellanordnung (3) mit der Stützschwinge (8) verbindet,
wobei die zumindest eine Verstellanordnung (3) ein sich parallel zur Querachse (102) erstreckendes, drehbares Verstellelement (31), insbesondere Rohr oder Welle, umfasst,
wobei das zumindest eine Modul (4) einen Hebel (10) umfasst, wobei das Verstellelement (31) über den Hebel (10) mit der Zusatzschwinge (9) verbunden ist, um durch Drehen des Verstellelementes (31) die Zusatzschwinge (9) zu bewegen, wobei der Hebel (10) drehfest mit dem Verstellelement (31) verbunden und der Hebel (10) drehbar mit der Zusatzschwinge (9) verbunden ist.

2. Landwirtschaftliches Gerät (1) nach Anspruch 1, wobei das Verstellelement (31) am Parallelogramm-Rahmenteil (71) des zumindest einen Moduls (4) drehbeweglich gelagert ist.

3. Landwirtschaftliches Gerät (1) nach einem der vorhergehenden Ansprüche, umfassend mehrere der Module (4), die entlang der Querachse (102) nebeneinander angeordnet sind, wobei das Verstellelement (31) mit den Hebeln (10) der mehreren Module (4) verbunden ist, um die Zusatzschwingen (9) der mehreren Module (4) gleichzeitig zu Bewegen.

4. Landwirtschaftliches Gerät (1) nach einem der vorhergehenden Ansprüche, wobei die Stützschwinge (8) drehbeweglich am Parallelogramm-Aufnahmeteil (72) befestigt ist.

5. Landwirtschaftliches Gerät (1) nach Anspruch 4, wobei
• der Drehpunkt der Stützschwinge (8) am Parallelogramm-Aufnahmeteil (72) vom Drehpunkt der Zusatzschwinge (9) an der Stützschwinge (8) mit einem ersten Abstand (A) beabstandet ist,
• der Drehpunkt des Verstellelements (31) vom Drehpunkt der Zusatzschwinge (9) am Hebel (10) mit einem zweiten Abstand (AA) beabstandet ist,
• wobei der erste Abstand (A) im Wesentlichem gleich dem zweiten Abstand (AA) ist, und/oder
• der Drehpunkt der Stützschwinge (8) am Parallelogramm-Aufnahmeteil (72) zum Drehpunkt der Zusatzschwinge (9) an der Stützschwinge (8) eine erste horizontale Distanz (B) aufweist,
• der Drehpunkt des Verstellelements (31) zum Drehpunkt der Zusatzschwinge (9) am Hebel (10) eine zweite horizontale Distanz (BB) aufweist,
• wobei die erste Distanz (B) im Wesentlichem gleich der zweiten Distanz (BB) ist,

6. Landwirtschaftliches Gerät (1) nach einem der vorhergehenden Ansprüche, wobei die Parallelogramm-Schwingen umfassen: zumindest eine obere Parallelogramm-Schwinge (73), die drehbeweglich am Parallelogramm-Rahmenteil (71) und drehbeweglich am Parallelogramm-Aufnahmeteil (72) befestigt ist, und zumindest eine untere Parallelogramm-Schwinge (74), die drehbeweglich am Parallelogramm-Rahmenteil (71) und drehbeweglich am Parallelogramm-Aufnahmeteil (72) befestigt ist.

7. Landwirtschaftliches Gerät (1) nach Anspruch 6, wobei die Länge (C) der zumindest einen oberen Parallelogramm-Schwinge (73) im Wesentlichen gleich der Länge (CC) der Zusatzschwinge (9) ist.

8. Landwirtschaftliches Gerät (1) nach Anspruch 6 oder 7 in Kombination mit Anspruch 4, wobei der Drehpunkt der Stützschwinge (8) am Parallelogramm-Aufnahmeteil (72) zwischen der zumindest einen oberen Parallelogramm-Schwinge (73) und der zumindest einen unteren Parallelogramm-Schwinge (74) liegt.

9. Landwirtschaftliches Gerät (1) nach einem der vorhergehenden Ansprüche, wobei die Zusatzschwinge (9) unter oder über der Parallelogrammanordnung (7) angeordnet ist; vorzugsweise wobei die Zusatzschwinge (9) unter der unteren Parallelogramm-Schwinge (74) oder über der oberen Parallelogramm-Schwinge (73) angeordnet ist.

10. Landwirtschaftliches Gerät (1) nach einem der vorhergehenden Ansprüche, umfassend zumindest einen Aktuator (12) zum Bewegen der zumindest einen Verstellanordnung (3), insbesondere zum Drehen des Verstellelements (31).

11. Landwirtschaftliches Gerät (1) nach einem der vorhergehenden Ansprüche, umfassend eine erste Reihe mit mehreren der Module (4) und zumindest eine weitere Reihe mit mehreren der Module (4), wobei pro Reihe eine der Verstellanordnungen (3) angeordnet ist, wobei die Verstellanordnung (3) der ersten Reihe mit der Verstellanordnung (3) der weiteren Reihe gekoppelt ist; vorzugsweise wobei das drehbare Verstellelement (31) der ersten Reihe mit dem drehbaren Verstellelement (31) der weiteren Reihe gekoppelt ist.
